# EUROPÄISCHE PATENTSCHRIFT

(11) **EP 2 171 256 B1**
(45) Veröffentlichungstag und Bekanntmachung des Hinweises auf die Patenterteilung: **11.05.2011**
(21) Anmeldenummer: 08802914.5
(22) Anmeldetag: 17.06.2008
(51) Int. Cl.: F02M 61/16, F02M 61/18, B21K 1/24, C21D 1/10

(54) **EINSPRITZVENTIL, VERFAHREN ZU DESSEN HERSTELLUNG UND VORRICHTUNG ZUR DURCHFÜHRUNG DES VERFAHRENS**
INJECTION VALVE, METHOD FOR ITS PRODUCTION AND DEVICE FOR CARRYING OUT THE METHOD
SOUPAPE D'INJECTION, PROCÉDÉ POUR LA PRODUIRE ET DISPOSITIF POUR METTRE LEDIT PROCÉDÉ EN OEUVRE

(30) Priorität: 22.06.2007 DE 102007029305
(43) Veröffentlichungstag der Anmeldung: 07.04.2010
(73) Patentinhaber: Robert Bosch GmbH, 70442 Stuttgart (DE)
(72) Erfinder: ZEISS, Bernhard, 96117 Memmelsdorf (DE); CHRIST, Wilhelm, 71634Ludwigsburg (DE); KUEBLER, Ralf, A-5020 Salzburg (AT); HOCH, Alfred, 97500 Ebelsbach (DE); HERRMANN, Matthias, A-5400 Hallein (AT); ULRICH, Lars, 70839 Gerlingen (DE)
(86) Internationale Anmeldenummer: PCT/EP2008/057589
(87) Internationale Veröffentlichungsnummer: WO 2009/000698

(56) Entgegenhaltungen:
- EP-A- 0 233 190
- WO-A-89/01529
- DE-A1-102004 035 292
- DE-C1- 3 801 703
- US-A- 3 596 037
- US-A- 5 534 081

## Beschreibung

### Stand der Technik

Die Erfindung betrifft ein Verfahren zur Herstellung eines Einspritzventils, wie es beispielsweise aus der Europäischen Patentschrift EP 233 190 B1 bekannt ist. Einspritzventile, wie sie vorzugsweise zur Einspritzung von Kraftstoff unter hohem Druck in einen Brennraum einer Brennkraftmaschine verwendet werden, werden in mehreren Arbeitsschritten hergestellt. In einem ersten Arbeitsschritt wird der eigentliche Ventilkörper aus Stahl geformt, wobei der Stahl noch ungehärtet und damit gut zu bearbeiten ist. Nach der Herstellung der äußeren und inneren Form des Einspritzventils wird dieses einem Härtungsprozess unterzogen, wobei das Einspritzventil stark erhitzt und anschließend abgeschreckt wird. Zur Behebung von Spannungen, die durch das ungleichmäßige Abkühlen des Ventilkörpers hervorgerufen werden, findet nach dem Härten eine Wärmebehandlung des Ventilkörpers statt, also ein erstes Anlassen, wobei der Ventilkörper unterhalb der Härtungstemperatur für eine gewissen Zeit auf einer erhöhten Temperatur gehalten wird, bis die aufgebauten Spannungen ausreichend reduziert sind. Hierbei kann der Ventilkörper mit verschiedenen Verfahren erwärmt werden, beispielsweise in einem Ölbad oder durch induktives Aufheizen, was beispielsweise aus der Offenlegungsschrift DE-OS 1 292 696 bekannt ist.

Einspritzventile, wie sie für die Einspritzung von Kraftstoff unter hohem Druck in Brennräume von Brennkraftmaschinen verwendet werden, arbeiten auf folgenden Weise: eine Ventilnadel ist längsverschiebbar im Ventilkörper angeordnet und wirkt mit einem Ventilsitz zum Öffnen und Schließen wenigstens einer Einspritzöffnung zusammen. Durch eine Längsbewegung der Ventilnadel wird die Einspritzung initiiert bzw. unterbrochen, so dass eine präzise Einspritzung von Kraftstoff unter hohem Druck in den Brennraum erreicht wird. Hierbei kommt es zu einer starken Beanspruchung der Ventilnadel im Bereich ihrer Führung und des Ventilsitzes, wobei der Verschleiß durch die oben erwähnte Härtung des Ventilkörpers gemindert wird.

Bei heutigen Ventilkörpern findet beim ersten Einsatz im gefeuerten Motorbetrieb eine teilweise Gefügeumwandlung des Werkstoffes statt, was zu einer Formänderung im Düsensitz führt, dort wo die Ventilnadel auf diesem aufsitzt. Diese Formänderung hat eine Veränderung der eingespritzten Menge zur Folge, so dass das Einspritzventil nicht mehr wie im Neubetrieb arbeitet, was insbesondere bei Common-Rail-Einspritzsystemen von Nachteil ist.

Eine Optimierung des Ventilkörpers in jeglicher Hinsicht ist nicht möglich: ein längeres Anlassen bei höheren Temperaturen erhöht zwar die Zähigkeit des Stahls, jedoch sinkt auch dessen Härte, so dass der Verschleiß im Bereich des Ventilsitzes und der Nadelführung größer wird. Wird andererseits das Anlassen bei niedrigen Temperaturen oder für kürzere Zeit ausgeführt, so bleibt der Ventilkörper relativ spröde und es kann insbesondere im Bereich des Ventilsitzes zu Rissen kommen.

### Vorteile der Erfindung

Das erfindungsgemäße Verfahren zur Herstellung eines Einspritzventils weist den Vorteil auf, dass die bei Einspritzventilen auftretende Gefügeumwandlung durch zwei nacheinander ausgeführte Wärmebehandlungen vorweggenommen werden. Diese Wärmebehandlungen zur Reduktion der inneren Spannungen (Anlassen) bewirken, dass die mit der Gefügeumwandlung einhergehende Mengenänderung nicht im Betrieb und damit nachträglich auftritt und so die Einspritzeigenschaften des Einspritzventils über die gesamte Lebensdauer konstant bleiben. Hierzu wird der Ventilkörper nach der Herstellung und Härtung insgesamt bei einer Temperatur T₁ angelassen. Anschließend folgt ein zweiter Anlassprozess, bei dem nur ein Teilbereich des Ventilkörpers erwärmt wird, wobei der Teilbereich des Ventilkörpers den Ventilsitz umfasst und bei einer Anlasstemperatur T₂ geschieht, die höher als die erste Anlasstemperatur T₁ ist. Dadurch bleibt die Härte des Ventilkörpers in dem Bereich, in dem die Ventilnadel geführt ist, in ausreichendem Maße erhalten und der Verschleiß somit entsprechend niedrig. Andererseits wird der Ventilsitz gezielt durch die erhöhte Anlasstemperatur zäher gemacht, so dass ein Sprödbruch in diesem Bereich vermieden wird. Die Temperatur des ersten Anlassprozesses T₁ ist dabei unterhalb der zweiten Anlasstemperatur T₂ und beträgt 150 bis 240 °C, vorzugsweise etwa 180 °C.

In einer ersten vorteilhaften Weiterbildung des Verfahrens ist der Ventilkörper während des zweiten Anlassens mit einer Flüssigkeit gefüllt, wobei diese unter Druck steht, vorzugsweise dem maximal auftretenden Druck, mit dem das Einspritzventil betrieben werden soll. Dadurch werden insbesondere dann, wenn die Ventilnadel ebenfalls mit einer Kraft in Richtung auf dem Ventilsitz beaufschlagt wird, Bedingungen geschaffen, wie sie auch beim ersten Einsatz des Einspritzventils im gefeuerten Motorbetrieb auftreten. Wird der zweite Anlassprozess unter diesem Bedingungen durchgeführt, kommt es der oben erwähnten Gefügeumwandlung im Stahl des Ventilkörpers und damit zum Angleich zwischen Ventilnadel und Ventilsitz, so dass der Prozess, der normalerweise beim ersten Betrieb des Einspritzventils erfolgt, bereits hier vorweggenommen wird. Das so geänderte Einspritzverhalten des Einspritzventils kann durch entsprechende Programmierung des Steuergeräts berücksichtigt werden, so dass eine weitere Änderung des Einspritzverhaltens nach Einbau in die Brennkraftmaschine nicht zu erwarten ist.

In einer weiterer vorteilhaften Ausgestaltung findet das zweite Anlassen durch induktive Erwärmung des Ventilkörpers statt. Durch eine geeignete Gestaltung der Spule, die das entsprechende magnetische Wechselfeld erzeugt, kann der Ventilkörper sehr gezielt im gewünschten Bereich auf die entsprechende Temperatur erwärmt werden. Vorzugsweise wird der Ventilkörper dabei auf eine Temperatur erwärmt, wie sie auch beim Betrieb der Brennkraftmaschine im Ventilkörper durch die Hitze im Brennraum entsteht. Als besonders vorteilhaft hat sich hierbei eine zweite Anlasstemperatur von 250 bis 400 °C erwiesen, bei einer ersten Anlasstemperatur von 160 bis 240°C.

### Zeichnung

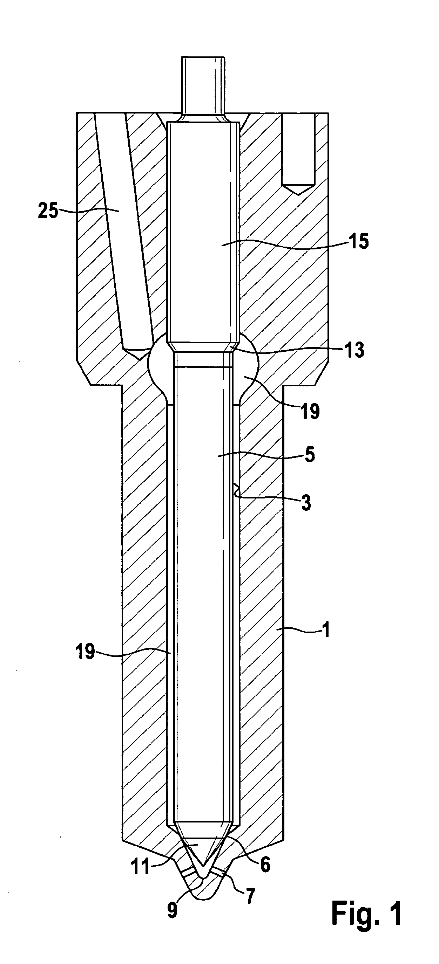

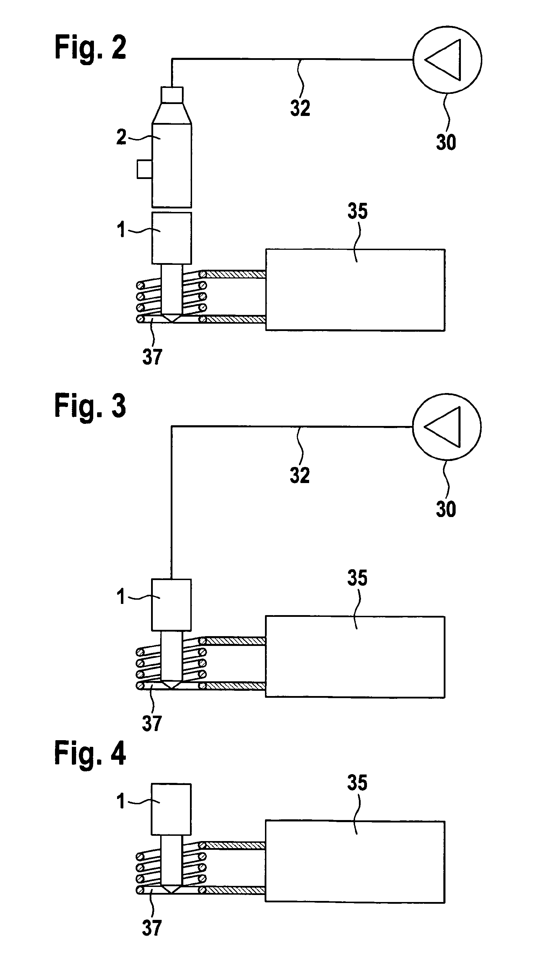

In der Zeichnung sind Gegenstände, die mit dem erfindungsgemäßen Verfahren hergestellt wurden ebenso wie Vorrichtungen zur Durchführung des Verfahrens dargestellt. Es zeigt Figur 1 ein Einspritzventil, wie es zur Einspritzung von Flüssigkeiten in Brennräume von Brennkraftmaschinen verwendet wird, das mit dem erfindungsgemäßen Verfahren hergestellt werden kann. Figur 2, Figur 3 und Figur 4 zeigen jeweils Vorrichtungen zur Durchführung des erfindungsgemäßen Verfahrens.

### Beschreibung

**Figur 1** zeigt einen Längsschnitt durch ein Einspritzventil, das mit dem erfindungsgemäßen Verfahren herstellbar ist. Das Einspritzventil, das in Einbaulage in einer Brennkraftmaschine mit einem in der Figur 1 nicht dargestellten Injektorkörper verbunden ist, weist einen Ventilkörper 1 auf, in dem eine Bohrung 3 ausgebildet ist. Die Bohrung 3 wird an ihrem brennraumzugewandten Ende von einem Ventilsitz 6 begrenzt, der im Wesentlichen eine konische Form aufweist und in ein Sackloch 9 mündet. Vom Sackloch 9 gehen mehrere Einspritzöffnungen 7 aus, durch die der Kraftstoff beim Betrieb des Einspritzventils ausgespritzt wird. In der Bohrung 3 ist eine Ventilnadel 5 längsverschiebbar angeordnet, die kolbenförmig ausgebildet ist und an ihrem ventilsitzabgewandten Ende einen Führungsabschnitt 15 aufweist, mit dem die Ventilnadel 5 in der Bohrung 3 flüssigkeitsdicht geführt ist. Dadurch wird ein Druckraum 19, der zwischen den Führungsabschnitt 15 und dem Ventilsitz 6 die Ventilnadel 5 umgibt, durch das geringe Führungsspiel im Bereich des Führungsabschnitts 15 abgedichtet.

Die Ventilnadel 5 weist in ihrem ventilsitzzugewandten Ende eine Dichtfläche 11 auf, die ebenfalls im Wesentlichen konisch ausgebildet ist und mit der die Ventilnadel 5 mit dem Ventilsitz 6 zusammen wirkt. Die Ventilnadel 5 wirkt mit dem Ventilsitz 6 derart zusammen, dass beim Aufsetzen der Dichtfläche 11 auf dem Ventilsitz 6 die Einspritzöffnungen 7 gegen den Druckraum 19 abgedichtet sind, während bei vom Ventilsitz 6 abgehobener Ventilnadel 5 das Sackloch 9 und damit die Einspritzöffnungen 7 mit dem Druckraum 19 verbunden sind. Der Druckraum 19 wird hierbei seinerseits über eine im Ventilkörper 1 verlaufende Zulaufbohrung 25 mit Kraftstoff unter hohem Druck befüllt.

Die Längsbewegung der Ventilnadel 5 innerhalb der Bohrung 3 wird durch das Verhältnis einer Schließkraft, die auf das ventilsitzabgewandte Ende der Ventilnadel 5 wirkt, und der hydraulischen Kraft, die durch den Druck im Druckraum 19 auf Teile der Dichtfläche 11 und auf eine Druckschulter 13 ausgeübt wird, gesteuert. Da die einzelnen Einspritzungen, insbesondere bei Verwendung des Einspritzventils in schnelllaufenden, selbstzündenden Brennkraftmaschinen, in sehr kurzer Zeit und sehr rasch hintereinander erfolgen, muss die Ventilnadel 5 mit hoher Kraft und hoher Geschwindigkeit bewegt werden. Die stellt hohe mechanische Anforderungen an die Ventilnadel 5 selbst und an den Ventilkörper 1, insbesondere im Bereich des Ventilsitzes 6.

Um ein Einspritzventil mit den entsprechenden Anforderungen zu bauen wird es erfindungsgemäß mit dem folgenden Verfahren hergestellt: Zunächst wird der Ventilkörper aus Stahl hergestellt, wobei der Stahl noch nicht gehärtet und eine gute Bearbeitbarkeit aufweist, beispielsweise durch Schmieden oder materialabtragende Prozesse. Nach Herstellung der äußeren Form und der Bohrung inklusive des Ventilsitzes wird der Ventilkörper gehärtet, vorzugsweise einsatzgehärtet, um eine entsprechende Härte und Verschleißfestigkeit zu erreichen. Da beim Härtungsprozess hohe Eigenspannungen innerhalb des Ventilkörpers auftreten und der Ventilkörper darüber hinaus nach dem Härten noch recht spröde ist, würde es beim Betrieb leicht zu einem Bruch im Bereich des Ventilsitzes 6 kommen. Um dies zu vermeiden, schließt sich an den Härtungsprozess eine Wärmebehandlung an, bei der der gesamte Ventilkörper 1 auf eine Temperatur T₁, die vorzugsweise 150 bis 240 °C beträgt, aufgeheizt und auf dieser Temperatur eine Zeitlang gehalten wird. Durch diese Wärmebehandlung bauen sich Eigenspannungen innerhalb des Ventilkörpers ab und die Zähigkeit des Materials nimmt zu.

Bei heutigen Ventilkörpern findet beim ersten Einsatz des gesamten montierten Injektors im gefeuerten Motorbetrieb eine teilweise Gefügeumwandlung des Werkstoffs im Bereich des Ventilsitzes 6 statt. Dies führt zu Formänderungen im Ventilsitz 6 und damit zu einer Veränderung der eingespritzten Menge, was insbesondere bei Common-Rail-Einspritzsystemen von Nachteil ist. Dies erklärt sich dadurch, dass beim gefeuerten Betrieb die Spitze des Einspritzventils, die dem Brennraum zugewandt ist und in der sich der Ventilsitz 6 befindet, der Hitze des Brennraums ausgesetzt ist und zusätzlich hohen hydraulischen und mechanischen Kräften durch die Ventilnadel 5 und durch den im Druckraum 19 anstehenden hohen Kraftstoffdruck, der bis zu 2000 bar betragen kann. Um diese Gefügeumwandlung vorwegzunehmen ist beim erfindungsgemäßen Herstellungsverfahren ein zweiter Anlassprozess des Ventilkörpers 1 in dem Bereich vorgesehen, der der erhöhten Motortemperatur ausgesetzt ist, die im Betrieb bis zu 300 °C betragen kann. Dieser Bereich ist der Endbereich des Ventilkörpers 1, in dem sich auch der Ventilsitz 6 befindet. Der Ventilkörper 1 wird also nach dem Härten und ersten Anlassen einem zweiten Anlassprozess bei einer Temperatur T₂ ausgesetzt, die im Wesentlichen der Temperatur entspricht, die im gefeuerten Motorbetrieb im Einspritzventil entsteht.

Das Erwärmen des Ventilkörpers 1 kann im Prinzip auf verschiedene Weisen geschehen: Die Erwärmung kann herkömmlich, beispielsweise in einem Ölbad vorgenommen werden, indem der Ventilkörper 1 bis zur gewünschten Höhe in das heiße Öl eingetaucht wird. Als besonders vorteilhaft hat sich jedoch die Erwärmung mittels eines Induktionsverfahrens erwiesen, bei dem der Ventilkörper 1 in eine Spule eingebracht wird, an die ein geeigneter Wechselstrom angelegt wird. Das innerhalb der Spule entstehende Magnetfeld induziert im Ventilkörper Wirbelströme, die für ein Aufheizen sorgen und so die Temperatur des Ventilkörpers gezielt in dem Bereich erhöhen, der dem Magnetfeld ausgesetzt ist. Dieses induktive Anlassen kann sehr schnell geschehen und dauert im Falle eines Ventilkörpers nur wenige Sekunden. **Figur 2** zeigt dazu eine entsprechende Anordnung, die einen Induktiv-Anlassgenerator 35 umfasst, der einen entsprechenden Wechselstrom erzeugt und durch eine Spule 37 leitet. Innerhalb der Spule 37 entsteht das oben erwähnte magnetische Wechselfeld, wobei die Spule 37 so dimensioniert ist, dass sich der Ventilkörper 1 mit seinem ventilsitzseitigen Endbereich innerhalb der Spule 37 anordnen lässt. In der in Figur 2 gezeigten Ausführung ist der Ventilkörper 1 mit einem Injektorkörper 2 verbunden, so dass insgesamt ein Kraftstoffinjektor gebildet wird, der sich in eine Brennkraftmaschine einbauen lässt, um dort Kraftstoff in einen Brennraum einzuspritzen.

Der Angleich zwischen Ventilsitz 6 und Ventilnadel 5 beim induktiven Anlassen ist dann besonders effektiv, wenn der Injektor den Bedingungen ausgesetzt ist, die auch beim Betrieb in der Brennkraftmaschine auftreten, d.h. den entsprechenden Kräften und dem benötigten Kraftstoffdruck. Zu diesem Zweck kann der Injektor beim Anlassen mit Kraftstoff unter hohem Druck befüllt werden, ohne dass jedoch eine Einspritzung stattfindet. Hierzu wird der Injektorkörper 2 über eine Hochdruckleitung 32 mit einer Hochdruckpumpe 30 verbunden, die einen entsprechenden Kraftstoffdruck zur Verfügung stellt und den Injektorkörper 2 genauso wie den Ventilkörper 1 unter hohen Kraftstoffdruck setzt. Unter diesen Bedingungen wird auch die Ventilnadel 5 mit hoher Kraft gegen den Ventilsitz 6 gepresst, so dass eine entsprechende Angleichung zwischen Ventilsitz 6 und Ventilnadel 5 bzw. Dichtfläche 11 beim induktiven Anlassen geschieht. Dieser Anlassprozess kann beim fertig montierten Injektor geschehen, also als letzter Prozessschritt bei der Herstellung des gesamten Kraftstoffinjektors.

**Figur 3** zeigt eine vorrichtung zum induktiven Anlassen, die praktisch der in Figur 2 gezeigten entspricht, jedoch wird hier nur das Einspritzventil nach dessen Fertigung induktiv angelassen, ohne dass es dabei mit einem Injektorkörper verbunden ist. In den Ventilkörper 1 wird wiederum über die Hochdruckpumpe 30 und die Hochdruckleitung 32 Kraftstoff unter hohem Druck eingeleitet, wobei die Ventilnadel entweder arretiert wird oder durch eine andere Vorrichtung mit einer entsprechenden Kraft gegen den Ventilsitz 6 gedrückt wird.

Eine weitere alternative Methode und dessen Vorrichtung zeigt **Figur 4**. Hier wird der Ventilkörper 1 einem induktiven Anlassprozess ausgesetzt, der sich unmittelbar an die Wärmebehandlung des Ventilkörpers 1 anschließt. Dieser Prozessschritt lässt sich zwar sehr ökonomisch in die Gesamtfertigung des Ventilkörpers 1 integrieren, weist jedoch den Nachteil auf, dass anschließend noch Schleifprozesse folgen und dass kein Angleich zwischen Ventilnadel 5 und Ventilsitz 6 erfolgt.

Durch das induktive Anlassen des Endbereichs des Ventilkörpers 1 wird nur dieser Bereich in seiner Zähigkeit erhöht, wobei aufgrund des Skineffekts, also der Tatsache, dass die Wirbelströme hauptsächlich an der Oberfläche des metallischen Ventilkörpers 1 erzeugt werden, nur die Oberfläche des Ventilkörpers 1 zäher gemacht wird, während der Rest des Ventilkörpers 1 eine höhere Härte behält. Da der Anlassprozess den ventilsitzabgewandten Bereich der Bohrung 3 nicht betrifft, werden die guten Verschleißeigenschaften des gehärteten Ventilkörpers 1 im Bereich des Führungsabschnitts 15 der Ventilnadel 5 nicht beeinträchtigt.

Das erste Anlassen des Ventilkörpers 1 geschieht üblicherweise bei einer Temperatur T₁ von 150 bis 240 °C, vorzugsweise bei etwa 180 °C. Die Temperatur während des zweiten Anlassens im Endbereich des Ventilkörpers beträgt vorzugsweise 250 bis 400 °C, wobei eine Temperatur von 270 bis 300 °C besonders vorteilhaft ist. Der angelegte Kraftstoffdruck entspricht vorzugsweise genau dem Druck, der maximal beim Betrieb des Einspritzventils in der Brennkraftmaschine auftritt, kann jedoch auch niedriger sein. Dies bedeutet einen Kraftstoffdruck von maximal etwa 1600 bis 2000 bar.

## Patentansprüche

1. Verfahren zur Herstellung eines Einspritzventils für Flüssigkeiten, vorzugsweise eines Einspritzventils zur Einspritzung von Kraftstoff in einen Brennraum einer Brennkraftmaschine, das einen Ventilkörper (1) mit einem darin ausgebildeten Ventilsitz (6) und eine Ventilnadel (5) aufweist, die mit dem Ventilsitz (6) zum Öffnen und Schließen wenigstens einer Einspritzöffnung (7) zusammenwirkt, **gekennzeichnet durch** folgende Verfahrensschritte:
- Herstellen des Ventilkörpers (1) aus Stahl;
- Härten des Ventilkörpers (1);
- Erstes Anlassen des gesamten Ventilkörpers (1) bei einer ersten Anlasstemperatur T₁;
- Zweites Anlassen eines Teilbereichs des Ventilkörpers (1) bei einer zweiten Anlasstemperatur T₂, wobei die erste Anlasstemperatur T₁ niedriger ist als die zweite Anlasstemperatur T₂ wobei der Ventilkörper (1) während des Anlassens mit einer Flüssigkeit gefüllt ist.

2. Verfahren nach Anspruch 1, **dadurch gekennzeichnet, dass** der Teilbereich den Ventilsitz (6) umfasst.

3. Verfahren nach Anspruch 2, **dadurch gekennzeichnet, dass** die Flüssigkeit unter Druck steht.

4. Verfahren nach Anspruch 3, **dadurch gekennzeichnet, dass** der Druck dem maximal auftretenden Druck entspricht, mit dem das Einspritzventil im Betrieb die Flüssigkeit ausspritzt.

5. Verfahren nach Anspruch 2 oder 4, **dadurch gekennzeichnet, dass** die Ventilnadel (5) während des Anlassens mit einer Kraft gegen den Ventilsitz (6) gedrückt wird.

6. Verfahren nach Anspruch 5, **dadurch gekennzeichnet, dass** die Ventilnadel (5) mit der maximalen Kraft, die beim Betrieb des Einspritzventils auftritt, gegen den Ventilsitz (6) gepresst wird.

7. Verfahren nach Anspruch 1, **dadurch gekennzeichnet, dass** das erste Anlassen und/oder das zweite Anlassen durch induktive Erwärmung des Ventilkörpers (1) vorgenommen wird.

8. Verfahren nach einem der Ansprüche 1 bis 7, **dadurch gekennzeichnet, dass** das Einspritzventil ein solches zur Einspritzung von Kraftstoff unter hohem Druck in einen Brennraum einer Brennkraftmaschine ist, wobei beim zweiten Anlassen der Teil des Ventilkörpers (1) erwärmt wird, der auch beim Betrieb der Brennkraftmaschine durch die Hitze im Brennraum am stärksten erwärmt wird.

9. Verfahren nach einem der Ansprüche 1 bis 8, **dadurch gekennzeichnet, dass** die zweite Anlasstemperatur T₂ 250 bis 400 °C beträgt.

10. Verfahren nach einem der Ansprüche 1 bis 9, **dadurch gekennzeichnet, dass** die erste Anlasstemperatur T₁ 160 bis 240°C beträgt.

11. Einspritzventil zur Einspritzung von Kraftstoff in einen Brennraum einer Brennkraftmaschine, **dadurch gekennzeichnet, dass** es nach einem der Ansprüche 1 bis 10 hergestellt ist.

## Claims

1. Method for manufacturing an injection valve for liquids, preferably an injection valve for injecting fuel into a combustion chamber of an internal combustion engine, which injection valve has a valve body (1) with a valve seat (6) formed therein and has a valve needle (5) which interacts with the valve seat (6) in order to open up and close off at least one injection opening (7), **characterized by** the following method steps:
- manufacturing the valve body (1) from steel;
- hardening the valve body (1);
- first annealing of the entire valve body (1) at a first annealing temperature T₁;
- second annealing of a partial region of the valve body (1) at a second annealing temperature T₂, the first annealing temperature T₁ being lower than the second annealing temperature T₂, with the valve body (1) being filled with a liquid during the annealing process.

2. Method according to Claim 1, **characterized in that** the partial region comprises the valve seat (6).

3. Method according to Claim 2, **characterized in that** the liquid is pressurized.

4. Method according to Claim 3, **characterized in that** the pressure corresponds to the maximum occurring pressure with which the injection valve ejects the liquid during operation.

5. Method according to Claim 2 or 4, **characterized in that** the valve needle (5) is pressed against the valve seat (6) with a force during the annealing process.

6. Method according to Claim 5, **characterized in that** the valve needle (5) is pressed against the valve seat (6) with the maximum force that occurs during the operation of the injection valve.

7. Method according to Claim 1, **characterized in that** the first annealing and/or the second annealing is carried out by means of inductive heating of the valve body (1).

8. Method according to one of Claims 1 to 7, **characterized in that** the injection valve serves for injecting highly pressurized fuel into a combustion chamber of an internal combustion engine, wherein the part of the valve body (1) heated during the second annealing is the part which is also heated most intensely during the operation of the internal combustion engine by the heat in the combustion chamber.

9. Method according to one of Claims 1 to 8, **characterized in that** the second annealing temperature T₂ is 250 to 400°C.

10. Method according to one of Claims 1 to 9, **characterized in that** the first annealing temperature T₁ is 160 to 240°C.

11. Injection valve for injecting fuel into a combustion chamber of an internal combustion engine, **characterized in that** said injection valve is manufactured according to one of Claims 1 to 10.

## Revendications

1. Procédé de fabrication d'une soupape d'injection pour liquides, de préférence d'une soupape d'injection pour l'injection de carburant dans une chambre de combustion d'un moteur à combustion interne, qui présente un corps de soupape (1) avec un siège de soupape (6) réalisé à l'intérieur de celui-ci et avec une aiguille de soupape (5) qui coopère avec le siège de soupape (6) pour ouvrir et fermer au moins une ouverture d'injection (7), **caractérisé par** les étapes de procédé suivante
- fabrication du corps de soupape (1) en acier ;
- durcissement du corps de soupape (1) ;
- premier recuit de la totalité du corps de soupape (1) à une première température de recuit T₁ ;
- deuxième recuit d'une région partielle du corps de soupape (1) à une deuxième température de recuit T₂, la première température de recuit T₁ étant inférieure à la deuxième température de recuit T₂, le corps de soupape (1) étant rempli d'un liquide pendant le recuit.

2. Procédé selon la revendication 1, **caractérisé en ce que** la région partielle comprend le siège de soupape (6).

3. Procédé selon la revendication 2, **caractérisé en ce que** le liquide est sous pression.

4. Procédé selon la revendication 3, **caractérisé en ce que** la pression correspond à la pression maximale se produisant, avec laquelle la soupape d'injection éjecte le liquide pendant le fonctionnement.

5. Procédé selon la revendication 2 ou 4, **caractérisé en ce que** l'aiguille de soupape (5) est pressée avec une force contre le siège de soupape (6) pendant le recuit.

6. Procédé selon la revendication 5, **caractérisé en ce que** l'aiguille de soupape (5) est pressée contre le siège de soupape (6) avec la force maximale qui se produit pendant le fonctionnement de la soupape d'injection.

7. Procédé selon la revendication 1, **caractérisé en ce que** le premier recuit et/ou le deuxième recuit sont effectués par chauffage inductif du corps de soupape (1).

8. Procédé selon l'une quelconque des revendications 1 à 7, **caractérisé en ce que** la soupape d'injection est une soupape pour l'injection de carburant à haute pression dans une chambre de combustion d'un moteur à combustion interne, et lors du deuxième recuit, on chauffe la partie du corps de soupape (1) qui est également chauffée le plus fort pendant le fonctionnement du moteur à combustion interne par la chaleur dans la chambre de combustion.

9. Procédé selon l'une quelconque des revendications 1 à 8, **caractérisé en ce que** la deuxième température de recuit T₂ vaut 250 à 400°C.

10. Procédé selon l'une quelconque des revendications 1 à 9, **caractérisé en ce que** la première température de recuit T₁ vaut 160 à 240°C.

11. Soupape d'injection pour l'injection de carburant dans une chambre de combustion d'un moteur à combustion interne, **caractérisée en ce qu'**elle est fabriquée selon l'une quelconque des revendications 1 à 10.
